# EUROPEAN PATENT APPLICATION

(11) **EP 4 723 549 A1**
(43) Date of publication of application: **08.04.2026**
(21) Application number: 24815889.1
(22) Date of filing: 31.05.2024
(51) Int. Cl.: H04L 9/40

(54) **METHOD AND SYSTEM FOR DEVELOPING CYBER ATTACK SCENARIO FOR SHIP**

(30) Priority: 02.06.2023 KR 20230071511
(71) Applicant: Hanwha Ocean Co., Ltd., Geoje-si, Gyeongsangnam-do 53302 (KR); Cytur Inc., Seoul 08511 (KR)
(72) Inventor: BAE, Yang Sop, Seoul 06082 (KR); YU, Ji Hun, Seongnam-si, Gyeonggi-do 13643 (KR); KIM, Byung Chul, Geoje-si, Gyeongsangnam-do 53243 (KR); JO, Yong Hyun, Seoul 08511 (KR); CHOI, Myeong Jin, Seoul 08511 (KR)
(74) Representative: Cabinet Beau de Loménie
(86) International application number: PCT/KR2024/007427
(87) International publication number: WO 2024/248515

(57) **Abstract**

The present invention provides a method and system for developing a cyberattack scenario for a ship, which are capable of: creating a ship attack scenario model to visualize all paths for an attacker to penetrate an attack target through an attack graph; and capturing the range of attack technology and characteristics to identify a potential attack surface.

## Description

### [Technical Field]

The present invention relates to a method and system for developing a ship cyberattack scenario, that create a ship attack scenario model to visualize all paths for an attacker to penetrate an attack target through an attack graph and captures the range of attack techniques and characteristics to identify potential attack surfaces.

### [Background Art]

As threats of cyberattacks continue to grow, governments and international organizations are demanding development of countermeasures to cyber threats. In response to such demand, research on development of cyberattack scenarios is conducted in Korea. The Korea Electronics and Telecommunications Research Institute published "Cyber Attack Simulation Technology Trends" in 2020, emphasizing the importance in development of cyberattack simulations to identify a security state and attack surfaces of a system at an early stage. For the development of cyberattack scenarios, a Korean patent entitled "Design and system for managing security vulnerability based on standard dataset for developing and validating cyber warfare scenarios" by the Korea Advanced Institute of Defense Science and Technology and registered in 2018 provide a system for standardized data-based countermeasures for security vulnerabilities by selecting security vulnerabilities suitable for creating cyber warfare scenarios based on open standard data to manage security vulnerability data. As another scenario creation approach, "Design and Implementation of Cyber Attack Simulator based on Attack Techniques Modeling," published in the Journal of the Korean Computer and Information Society, derives various attack scenarios by modeling cyberattack techniques and discloses a simulator for cybersecurity training. In addition, "Research on stage-based flow graph model for representation of cyberattack training scenarios," published in the Journal of Information Security, discloses a stage-based flow graph model that can represent various cyberattack training scenarios, which were difficult to represent through attack tree modeling techniques. Despite such active research and active investment of the shipbuilding and offshore industry in autonomous ships and smart ships, also known as maritime mobility, specific regulations and scenarios for cybersecurity have not yet been developed.

In addition, conventional techniques fail to account for unique characteristics of maritime vessels and thus are limited in application. As one unique characteristic of ship systems, ship communication systems use communication protocols optimized for use at sea, unlike land-based communication protocols. Moreover, computer based systems (CBSs) for ships have specific hardware and software designed for use on ships. Given the unique characteristics of ship systems, it is essential to develop a ship cyberattack scenario system that reflects specificities of ship communication protocols and specific hardware and software used in the ship systems.

Cyberattack trees (CATs), which visualize an attack process of a typical cyberattack scenario, have limitations in explaining an interconnected relationship among cyberattacks, since the attack process is linear and hierarchical. Semantic graphs are problematic in that the graph becomes complex and difficult to interpret upon increase in amount of data.

The related art is disclosed in Korean Patent Registration No. 10-1697189 (January 17, 2017).

### [Disclosure]

### [Technical Problem]

It is an aspect of the present invention to provide a method and system for developing a ship cyberattack scenario, which can create a ship attack scenario model to visualize all paths for an attacker to penetrate an attack target through an attack graph and can establish a countermeasure strategy by identifying potential attack surfaces through analysis of various intrusion techniques, attack techniques, attributes, and impacts.

### [Technical Solution]

In accordance with one aspect of the present invention, a method for developing a ship cyberattack scenario includes: an asset identification step in which a ship system and stakeholder assets are identified; a threat data confirmation step in which asset information identified in the asset identification step is analyzed to determine whether threat data is present; an attack target selection step in which an attack target is selected upon confirming in the threat data confirmation step that at least one of the identified assets is present in the threat data; an attack scenario creation step in which an attack scenario for the attack target selected in the attack target selection step is created; and an attack graph output step in which an attack graph according to the attack scenario created in the attack scenario creation step is output.

The attack scenario creation step may further include: an attack target vulnerability assignment step in which a vulnerability is assigned to the selected attack target; an attack execution step in which an attack is executed based on the vulnerability assigned to the attack target in the target vulnerability assignment step; a subsequent attack execution step in which a subsequent attack is executed using a different technique or tactic after the attack execution step is executed; an attack target striking step in which the attack target is struck after the subsequent attack execution step; a post-condition derivation step in which a post-condition is derived after the attack target is struck in the attack target striking step; an additional attack surface identification step in which an additional attack surface is identified based on contents derived in the post-condition derivation step; and an attack graph formation step in which an attack graph is formed based on the executed attack scenario.

The attack scenario creation step may further include: executing a subsequent attack if the additional attack surface is identified in the additional attack surface identification step; and executing additional attacks by striking n additional attack targets
The attack graph output step may include visualizing and outputting an attack graph through combination of a cyberattack tree (CAT) model and a diamond analysis model.

The attack graph output step may include capturing the range of attack techniques and characteristics, and enabling identification of potential attack surfaces.

In accordance with another aspect of the present invention, a system for developing a ship cyberattack scenario includes: an asset identification unit configured to identify a ship system and stakeholder assets; a threat data confirmation unit configured to analyze asset information identified through the asset identification unit to determine whether threat data is present; an attack target selection unit configured to select an attack target upon confirming by the threat data confirmation unit that at least one of the identified assets is present in the threat data; an attack scenario creation unit configured to create an attack scenario for the attack target selected by the attack target selection unit; and an attack graph output unit configured to output an attack graph according to the attack scenario created by the attack scenario creation unit.

The attack scenario creation unit may further include: an attack target vulnerability assignment unit configured to assign a vulnerability to the selected attack target; an attack execution unit configured to execute an attack based on the vulnerability assigned to the attack target by the attack target vulnerability assignment unit; a subsequent attack execution unit configured to execute a subsequent attack using a different technique or tactic than the attack execution unit; an attack target striking unit configured to strike the attack target subsequently attacked by the subsequent attack execution unit; a post-condition derivation unit configured to derive a post-condition after the attack target is struck by the attack target striking unit; an additional attack surface identification unit configured to identify additional attack surfaces based on contents derived by the post-condition derivation unit; and an attack graph formation unit configured to form an attack graph based on the executed attack scenario if there are no additional attack targets identified by the additional attack surface identification unit.

The attack scenario creation unit may further include: a subsequent attack execution unit configured to execute a subsequent attack if the additional attack surface is identified by the additional attack surface identification unit; and an additional attack target strike unit configured to execute additional attacks by striking n additional attack targets.

The attack graph output unit may visualize and output an attack graph through combination of a cyberattack tree (CAT) model and a diamond analysis model.

The attack graph output unit may capture the range of attack techniques and characteristics, and may identify potential attack surfaces.

### [Advantageous Effects]

According to the present invention, the method and system for developing a ship cyberattack scenario can employ a ship attack scenario model to visualize all paths for an attacker to penetrate an attack target through an attack graph and can establish a countermeasure strategy by identifying potential attack surfaces through analysis of various intrusion techniques, attack techniques, attributes, and impacts.

### [Description of Drawings]

FIG. 1 is a flow diagram illustrating a method for creating a ship cyberattack scenario model according to the present invention.
FIG. 2 is a flowchart illustrating a method for developing a ship cyberattack scenario according to the present invention.
FIG. 3 is a flowchart illustrating a method for creating an attack scenario according to the present invention.
FIG. 4 is an algorithm of a ship cyberattack scenario according to one embodiment of the present invention.
FIG. 5 is a diagram illustrating an attack graph generated by the algorithm according to the embodiment of the present invention shown in FIG. 4.
FIG. 6 is an algorithm of a ship cyberattack scenario according to another embodiment of the present invention.
FIG. 7 is a diagram illustrating an attack graph generated by the algorithm according to the embodiment of the present invention shown in FIG. 6.

### [Best Mode]

The above and other aspects, features, and advantages of the present invention will become apparent from the detailed description of the following embodiments in conjunction with the accompanying drawings.

The terminology used herein is for the purpose of describing particular embodiments and is not intended to be limiting. As used herein, the terms "comprises," "comprising," "includes," and/or "including," when used in this specification, specify the presence of stated features, integers, steps, operations, elements, components, and/or groups thereof, but do not preclude the presence or addition of one or more other features, integers, steps, operations, elements, components, and/or groups thereof. Further, as used herein, the singular forms "a", "an" and "the" are intended to include the plural forms as well, unless the context clearly indicates otherwise.

Hereinafter, exemplary embodiments of the present invention will be described in detail with reference to the accompanying drawings. It should be understood that the embodiments are provided for complete disclosure and thorough understanding of the present invention by those skilled in the art and that the present invention is not limited to the following embodiments and may be embodied in different ways by those skilled in the art.

In a method and system for developing a ship cyberattack scenario according to the present invention, a ship attack scenario model visualizes all paths for an attacker to penetrate an attack target through an attack graph in which a cyberattack tree (CAT) and a diamond model are combined, thereby providing comprehensive insight into a dependency relationship between cyberattacks.

In addition, the method and system for developing a ship cyberattack scenario according to the present invention can identify potential attack surfaces by analyzing various intrusion techniques, attack techniques, attributes, and impacts using a MITRE ATT&CK Framework and capturing the range of attack techniques and attributes through analysis of attack scenario models.

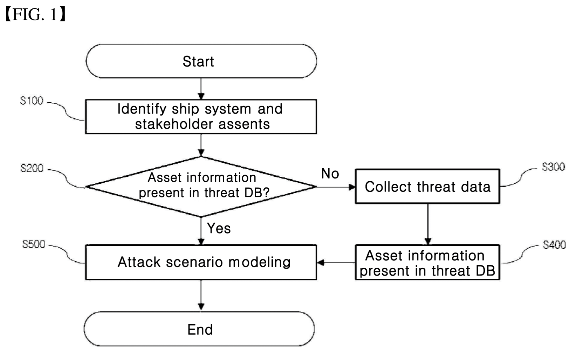

FIG. 1 is a flow diagram illustrating a method for creating a ship cyberattack scenario model according to the present invention.

The method may include an asset identification step S100 in which a ship system and stakeholder assets are identified, a threat determination step S200 in which it is determined whether the identified asset information is present in a set of threat databases DB, and an attack scenario modeling step S500 in which a cyberattack scenario is created by performing modeling of an attack scenario upon determining in the threat determination step S200 that the identified asset information is present in the set of threat databases.

The method may further include a threat data collection step S300 in which additional threat data is collected when the asset information identified in the threat determination step S200 is not present in the set of threat databases, and a confirmation step S400 in which it is confirmed whether the asset information identified in the threat data collection step S300 is present in a set of additionally collected threat databases. Thus, when the identified asset information is present in the set of additionally collected threat databases, attack scenario modeling may be performed to create a cyberattack scenario.

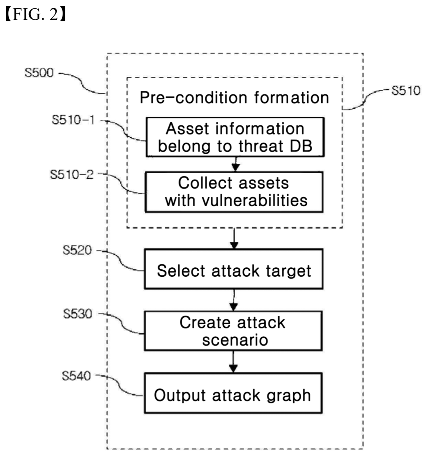

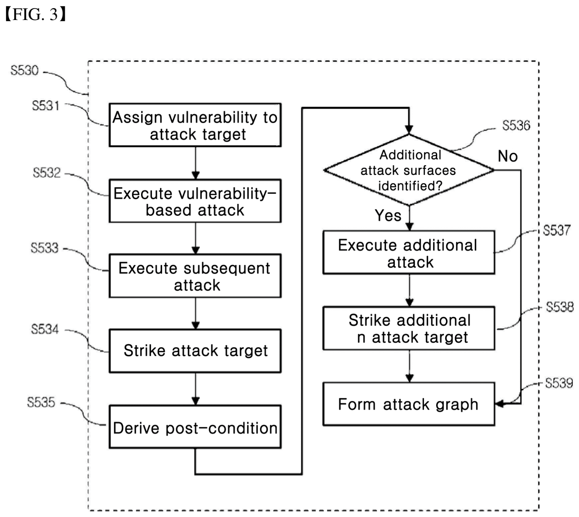

More specifically, referring to FIG. 2 and FIG. 3, the method for developing a ship cyberattack scenario according to the present invention and the attack scenario creation method may include an asset identification step S510 in which a ship system and stakeholder assets are identified, an attack target selection step S520, an attack scenario creation step S530, and an attack graph output step S540.

The asset identification step S510 may include a step S510-1 of determining whether the identified asset information is present in the set of threat databases, and a step S510-2 of analyzing the asset information to collect assets where vulnerabilities are present.

Further, the attack target selection step S520 may include selecting, as an attack target, at least one of the assets collected in the asset identification step.

The attack scenario creation step S530 may include assigning a vulnerability to an attack target (S531), executing a vulnerability-based attack (S532), executing a subsequent attack (S533) after the vulnerability-based attack, striking the attack target (S534), deriving a post-condition (S535), identifying additional attack surfaces after derivation of the post-condition (S536), and forming an attack graph (S539), if there are no additional attack surfaces.

Further, if it is identified in the additional attack surface identification step S536 that there are additional attack surfaces, subsequent attacks may be executed (S537), additional n attack targets may be struck (S538), and an attack graph may be formed (S539).

In addition, as cyberattack tactics exploiting vulnerabilities in specific systems become more sophisticated, it is essential to identify the vulnerabilities and to detect intrusions as early as possible in order to minimize damage caused by cyberattacks. Among mechanisms for detection of intrusions, cyberattack trees (CATs), which represent an attack process in the form of a tree, can provide a systematic and structural solution for establishing security countermeasures against various attacks on network systems.

Further, the system for developing a ship cyberattack scenario according to the present invention includes: an asset identification unit 100 configured to identify a ship system and stakeholder assets; a threat data confirmation unit 200 configured to analyze asset information identified through the asset identification unit to determine whether threat data is present; an attack target selection unit 300 configured to select an attack target upon confirming by the threat data confirmation unit that at least one of the identified assets is present in the threat data; an attack scenario creation unit 400 configured to create an attack scenario for the attack target selected by the attack target selection unit; and an attack graph output unit 500 configured to output an attack graph according to the attack scenario created by the attack scenario creation unit.

The attack graph output unit 500 may visualize and output an attack graph through combination of a cyberattack tree (CAT) model and a diamond analysis model.

The attack graph output unit 500 may capture the range of attack techniques and characteristics and may identify potential attack surfaces.

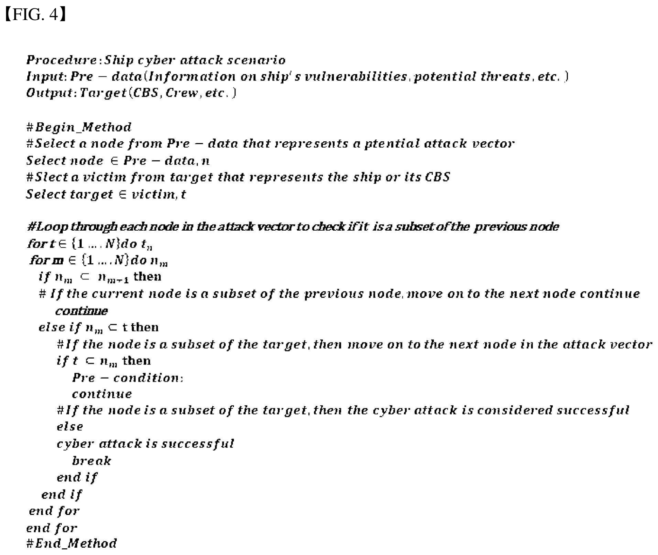

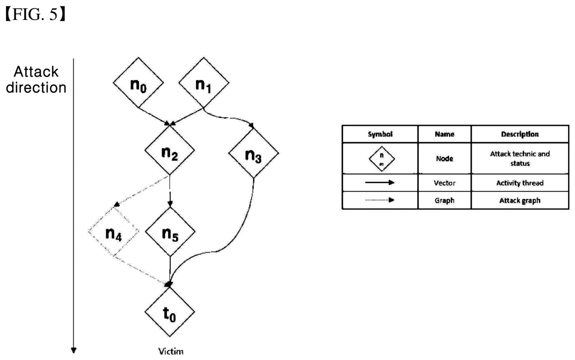

FIG. 4 is an algorithm of a ship cyberattack scenario according to one embodiment of the present invention. FIG. 5 is a diagram illustrating an attack graph generated by the algorithm according to the embodiment of the present invention shown in FIG. 4.

In the attack graph utilizing the cyberattack tree (CAT) model and the diamond analysis model, a plurality of root nodes of the cyberattack tree may represent various attack methods against an attack target(victim) as a final goal.

In the diamond analysis model, nodes represent attack techniques and states, vectors represent activity threads, and graphs represent attack graphs.

A cyberattack is executed in an attack direction from top to bottom and an attack graph may be formed by creating an attack scenario against an attack target(victim) at least at one node.

In the algorithm, a node belonging to precursor data that represents potential attack vectors is selected and an attack target(victim) is selected from targets that represent a ship or a computer-based system (CBS).

Next, each node in an attack vector is repeated to confirm whether the corresponding node belongs to a subset of a previous node and the attack process proceeds to the next node upon confirming that the corresponding node belongs to the subset of the previous node.

If the node belongs to the subset of the attack target, the attack process proceeds to the next node in the attack vector.

Then, the cyberattack is considered to be successful if the node is the subset of the attack target.

Data collection criteria may collect threat databases (DB) based on maritime threat intelligence information (IoC, CVE, CPE, CWE, CVSS, Dark Web, Attack Case).

In identification of the ship system and the stakeholder assets, assets may be identified from ship system information, stakeholder accounts including crews, and network information (IP, Domain, DNS, and the like) of related companies.

In the present invention, the cyberattack tree (CAT) model and the diamond analysis model are selected since the combination of these models can provide a comprehensive and flexible approach to understanding cyberattack scenarios, and top-down and vertical attack directions can provide a deeper understanding of a dependency relationship between cyberattacks.

In addition, compatibility of the MITRE ATT&CK framework combined with the diamond analysis model is useful for analyzing intrusion techniques, attack techniques, attack strategies, and the like.

With the combined model, it is possible to effectively analyze different types of cyberattack scenarios.

Accordingly, in analysis of the cyberattack model, the MITRE ATT&CK framework is used for systematically understanding various phases and components of an attack.

The techniques in the MITRE ATT&CK framework may be used to categorize attack phases in the cyberattack model, and attack states and techniques of each node may be analyzed through sub-techniques or tactics.

This approach provides an in-depth understanding of tactics and strategies used by an attacker and assists in understanding of a motivation of the attacker. In addition, the IACS No. 171 guideline may be referenced to determine impacts of cyberattacks on availability, confidentiality, integrity, and traceability of systems and equipment.

In addition, an impact of a potential incident in the UR E22 guidance is referenced to determine damage and potential impacts on an on-board CBS of a ship.

To derive countermeasures by providing an insight into tactics and strategies used by a cyber attacker to mitigate damage by cyberattacks, the cyberattack scenario model employs mitigations of the MITRE ATT&CK framework. In the framework, an attack behavior of the cyber attacker may be analyzed and mitigations capable of countering the cyberattacks of the cyber attacker may be suggested to develop countermeasures against attack surfaces.

Furthermore, in the event of a cyberattack, potential damage to the ship may be assessed, mitigation measures may be established, and the cyberattack may be mitigated through enhanced cybersecurity posture and proactive planning.

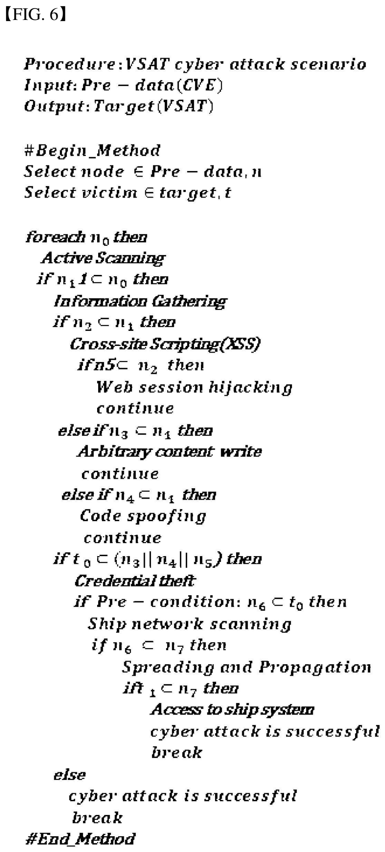

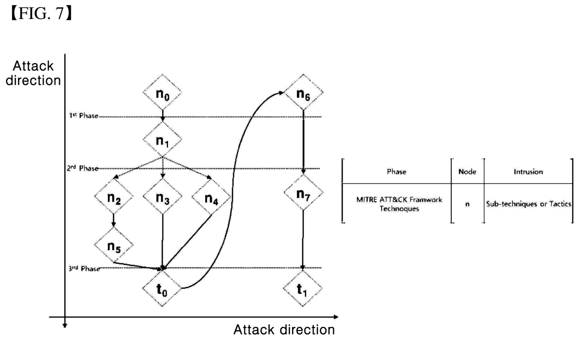

FIG. 6 is an algorithm of a ship cyberattack scenario according to another embodiment of the present invention and FIG. 7 is a diagram illustrating an attack graph generated by the algorithm according to the embodiment of the present invention shown in FIG. 6.

In an attack scenario against an attack target at each node, attack techniques and tactics may be represented by three phases.

In cyberattack scenarios against Very Small Aperture Terminal (VSAT) communication, a list of vulnerabilities is used to collect threat information regarding VSAT assets. The list is Common Vulnerabilities and Exposures (CVE), which is a collection of software and firmware vulnerabilities identified and categorized by MITRE, a non-profit research and development organization sponsored by the U.S. federal government, and is available as precursor threat data for the VSAT assets.

Here, a node belonging to CVE data is selected and the VSAT is selected as an attack target.

If node n₁ node belongs to node n₀, information collection is performed through active scanning, and if node n₂ node belongs to node n₁, cross site scripting is performed.

If node n₅ belongs to the node n₂, web session hijacking is performed.

If node n₃ belongs to the node n₁, an arbitrary content is written, and if n₄ node belongs to the n1 node, code spoofing is performed.

If any one of the nodes n₃, n₄, and n₅ belong to an attack target t₀, credential theft is performed.

If node n₆ belongs to the attack target t₀, scanning of a ship network is performed, and if the node n₆ belongs to node n₇, spreading and propagation are performed.

If a new attack target T₁ belongs to the node n₇, it is determined that an approach to a cyberattack against the ship system is successful.

Therefore, according to the present invention, it is possible to construct a system capable of representing an attack graph through combination of the cyberattack tree (CAT) model and the diamond analysis model and capable of identifying potential attack surfaces of the ship system and securing cyberattack countering capabilities through development of ship cyberattack scenarios.

Further, the present invention has an effect of enabling detection of inherent vulnerabilities of the ship system and potential vulnerabilities through cyberattack scenarios.

Furthermore, the present invention has effects of providing preventive countermeasures through creation of potential cyber threat scenarios from cyberattack scenarios and assisting in enhancement of overall cyber resilience through identification of potential attack surfaces and establishment of effective strategies for countering cyberattacks by identifying and analyzing a full scope of cyberattacks through attack graphs by identifying and analyzing a full scope of cyberattacks through attack graphs.

Furthermore, the present invention has an effect of enhancing cyberattack countering capabilities and cyber risk management of a manager in practice by evaluating scenario-based graphs through a threat analysis approach.

Embodiments of the present invention described above may be implemented in the form of program instructions executable by various computer components and recorded on a computer-readable recording medium. The computer-readable recording medium may include program instructions, a data file, a data structure, and the like, solely or in combination. The program instructions recorded on the computer-readable recording medium may be specially designed and constructed for the present invention or may be those known and available to those skilled in the art of computer software. Examples of the computer-readable medium include a hardware device specifically configured to store and execute the program instructions, including: magnetic media, such as hard disks, floppy disks, and magnetic tape; optical recording media, such as CD-ROMs and DVDs; magneto-optical media, such as floptical disks; ROMs; RAMs; and flash memories. Examples of the program commands include not only machine language code generated by a compiler, but also high-level language code executable on a computer using an interpreter or the like. The hardware device may be configured to operate as one or more software modules to perform the operations according to the present invention, or vice versa.

Although some embodiments have been described herein, it should be understood that these embodiments are provided for illustration only and are not to be construed in any way as limiting the present invention, and that various modifications and changes can be made by those skilled in the art without departing from the spirit and scope of the invention. Therefore, the accompanying claims and their equivalents are intended to cover such changes or modifications as would fall within the scope and spirit of the present invention.

## Claims

1. A method for developing a ship cyberattack scenario, comprising:
an asset identification step in which a ship system and stakeholder assets are identified;
a threat data confirmation step in which asset information identified in the asset identification step is analyzed to determine whether threat data is present;
an attack target selection step in which an attack target is selected upon confirming in the threat data confirmation step that at least one of the identified assets is present in the threat data;
an attack scenario creation step in which an attack scenario for the attack target selected in the attack target selection step is created; and
an attack graph output step in which an attack graph according to the attack scenario created in the attack scenario creation step is output.

2. The method for developing a ship cyberattack scenario according to claim 1, wherein the attack scenario creation step comprises:
an attack target vulnerability assignment step in which a vulnerability is assigned to the selected attack target;
an attack execution step in which an attack is executed based on the vulnerability assigned to the attack target in the target vulnerability assignment step;
a subsequent attack execution step in which a subsequent attack is executed using a different technique or tactic after the attack execution step is executed;
an attack target striking step in which the attack target is struck after the subsequent attack execution step;
a post-condition derivation step in which a post-condition is derived after the attack target is struck in the attack target striking step;
an additional attack surface identification step in which an additional attack surface is identified based on contents derived in the post-condition derivation step; and
an attack graph formation step in which an attack graph is formed based on the executed attack scenario.

3. The method for developing a ship cyberattack scenario according to claim 2, wherein the attack scenario creation step further comprises:
executing a subsequent attack if the additional attack surface is identified in the additional attack surface identification step; and
executing additional attacks by striking n additional attack targets.

4. The method for developing a ship cyberattack scenario according to claim 1, wherein the attack graph output step comprises visualizing and outputting an attack graph through combination of a cyberattack tree (CAT) model and a diamond analysis model.

5. The method for developing a ship cyberattack scenario according to claim 4, wherein the attack graph output step comprises capturing the range of attack techniques and characteristics and enabling identification of potential attack surfaces.

6. A system for developing a ship cyberattack scenario, comprising:
an asset identification unit configured to identify a ship system and stakeholder assets;
a threat data confirmation unit configured to analyze asset information identified through the asset identification unit to determine whether threat data is present;
an attack target selection unit configured to select an attack target upon confirming by the threat data confirmation unit that at least one of the identified assets is present in the threat data;
an attack scenario creation unit configured to create an attack scenario for the attack target selected by the attack target selection unit; and
an attack graph output unit configured to output an attack graph according to the attack scenario created by the attack scenario creation unit.

7. The system for developing a ship cyberattack scenario according to claim 6, wherein the attack scenario creation unit further comprises:
an attack target vulnerability assignment unit configured to assign a vulnerability to the selected attack target;
an attack execution unit configured to execute an attack based on the vulnerability assigned to the attack target by the attack target vulnerability assignment unit;
a subsequent attack execution unit configured to execute a subsequent attack using a different technique or tactic than the attack execution unit;
an attack target striking unit configured to strike the attack target subsequently attacked by the subsequent attack execution unit;
a post-condition derivation unit configured to derive a post-condition after the attack target is struck by the attack target striking unit;
an additional attack surface identification unit configured to identify additional attack surfaces based on contents derived by the post-condition derivation unit; and
an attack graph formation unit configured to form an attack graph based on the executed attack scenario if there are no additional attack targets identified by the additional attack surface identification unit.

8. The system for developing a ship cyberattack scenario according to claim 7, wherein the attack scenario creation unit further comprises: a subsequent attack execution unit configured to execute a subsequent attack if the additional attack surface is identified by the additional attack surface identification unit; and an additional attack target strike unit configured to execute additional attacks by striking n additional attack targets.

9. The system for developing a ship cyberattack scenario according to claim 6, wherein the attack graph output unit visualizes and outputs an attack graph through combination of a cyberattack tree (CAT) model and a diamond analysis model.

10. The system for developing a ship cyberattack scenario according to claim 9, wherein the attack graph output unit captures the range of attack techniques and characteristics, and identifies potential attack surfaces.
